# EUROPEAN PATENT SPECIFICATION

(11) **EP 3 138 949 B1**
(45) Date of publication and mention of the grant of the patent: **06.11.2024**
(21) Application number: 16186921.9
(22) Date of filing: 02.09.2016
(51) Int. Cl.: D06F 39/08, D06F 29/00

(54) **LAUNDRY TREATING APPARATUS WITH DRAINAGE CONNECTOR**
WÄSCHEBEHANDLUNGSVORRICHTUNG MIT ABLAUFSTUTZEN
APPAREIL DE TRAITEMENT DU LINGE AVEC AJUTAGE D'ÉVACUATION

(30) Priority: 04.09.2015 KR 20150125729
(43) Date of publication of application: 08.03.2017
(73) Proprietor: LG ELECTRONICS INC., Yeongdeungpo-gu Seoul 07336 (KR)
(72) Inventor: KIM, Wooseong, 08592 Seoul (KR); LEE, Jihong, 08592 Seoul (KR); SUNG, Kijung, 08592 Seoul (KR)
(74) Representative: Vossius & Partner Patentanwälte Rechtsanwälte mbB

(56) References cited:
- EP-A1- 2 065 505
- EP-A2- 1 350 884
- WO-A2-2012/150539
- DE-A1- 3 627 732
- US-A1- 2010 064 736
- US-A1- 2012 255 330
- US-A1- 2015 059 418

## Description

The present invention relates to a laundry treating apparatus.

Typical laundry treating apparatuses includes apparatuses for washing laundry, apparatuses for drying laundry, and apparatuses capable of performing both washing and drying of laundry.

A conventional laundry treating apparatus includes a cabinet, a tub which is provided inside the cabinet to store water therein, and a drum which is provided inside the tub to store laundry therein. Such laundry treating apparatuses are classified into a front-loading type laundry treating apparatus, in which laundry is inserted into a tub through an insertion port provided in the front of the apparatus, and a top-loading type laundry treating apparatus, in which laundry is inserted into a tub through an insertion port provided in the top of the apparatus.

Among them, there is also a laundry treating apparatus including a tub which may be withdrawn from a cabinet. Such a laundry treating apparatus includes a movable water supply part, which serves to supply water to the tub, and a movable discharge part, which serves to discharge water out of the cabinet, when the tub is withdrawn from or is inserted into the cabinet. However, in the laundry treating apparatus including the tub capable of being withdrawn from the cabinet, some of water may leak through the discharge part in the process of washing laundry.

EP 2 065 505 A1 discloses a laundry treating device according to the preamble of claim 1 including a first draining pipe to guide water discharged from the first laundry treating device, a second draining pipe to guide water discharged from the second laundry treating device, and a joining pipe connected to the first and second draining pipes at a joining point of the first and second draining pipes.

US 2012/255330 A1 relates to a drain hose clip that includes a body configured to be coupled to the drain hose and to secure the drain hose to the household appliance.

US 2010/064736 A1 is directed to a laundry treating machine that is configured to achieve simultaneous or selective supply of water and simultaneous or selective draining of wash water for the laundry treating device and pedestal laundry treating device.

WO 2012/150539 A2 discloses an appliance for treating textile items that comprises a diverting device that has an inlet, connected to a delivery section of a pump, a first outlet, connected to a second duct to run washing liquid into the tub, and a second outlet, connected with a drain duct.

US 2015/059418 A1 relates to a laundry treating apparatus that comprises a drain pipe unit guiding wash water discharged from a pump to the outside of a cabinet, and a communication unit selectively communicating a drain pipe unit with external air.

DE 36 27 732 A1 is directed to a conveying device for a cleaning machine that has a heating section and a pump section, which is connected directly thereto in the flow direction.

EP 1 350 884 A2 discloses a water drainage device for a washing machine that comprises a conduit, a drain pump and a drain pipe.

Accordingly, the present invention is directed to a laundry treating apparatus that substantially obviates one or more problems due to limitations and disadvantages of the related art.

An object of the present invention is to provide a laundry treating apparatus capable of preventing water stored in a tub from leaking through a drainage unit in a process of washing laundry.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

The objects of the present invention are achieved by the features defined in the independent claim. Preferred embodiments are defined in the dependent claims.

The invention relates to a laundry treating apparatus including a cabinet, a drawer provided to be withdrawn from the cabinet, a tub provided in the drawer and receiving washing water, a drum rotatably provided in the tub and receiving laundry, a drainage pump allowing the washing water in the tub to be discharged out of the tub, a connection passage through which the washing water discharged by the drainage pump is guided out of the cabinet, and a connector provided on an outer surface of the cabinet and communicating with the connection passage, wherein the connector includes a connector inlet port, into which washing water is introduced, and a connector outlet port, from which washing water is discharged, and the connector outlet port is provided at a position higher than the connector inlet port.

The connector may be provided at a reference point that is set as a point higher than a maximum level of washing water stored in the tub.

The connector outlet port may be provided at a position higher than a maximum height of the connector inlet port.

The connector outlet port may be provided parallel to the ground.

The connector outlet port may be provided at a reference point that is set as a point higher than a maximum level of washing water stored in the tub.

The laundry treating apparatus may further include a connector fastening part provided at an end of the connection passage, and fastened to the connector inlet port, and position guide parts provided in a periphery of the connector fastening part and the connector inlet port, the position guide parts serving to fix the connector in place when the connector inlet port is coupled to the connector fastening part.

The position guide parts may include a first position guide part provided in the connector inlet port, and a second position guide part provided in the periphery of the connector fastening part, and rotation of the connector may be prevented, when the connector inlet port is coupled to the connector fastening part, by an interaction between the first and second position guide parts.

The first position guide part may be provided in a portion of an edge of the connector inlet port, the second position guide part may be provided in a portion of the periphery of the connector fastening part, and when the connector inlet port is coupled to the connector fastening part, the second position guide part may form a remaining portion of the edge of the connector inlet port.

The first position guide part may have a ring shape, the second position guide part may have a protrusion shape, and the second position guide part may be inserted into the ring-shaped first position guide part when the connector inlet port is coupled to the connector fastening part.

The first and second position guide parts may consist of a plurality of first and second position guide parts.

The position guide parts may include a protrusion portion provided in the connector inlet port, a circular groove provided in the periphery of the connector fastening part, the connector inlet port being seated in the circular groove, and a protrusion groove provided in the circular groove, and coupled to the protrusion portion.

The protrusion portion and the protrusion groove may consist of a plurality of protrusion portions and protrusion grooves.

It is to be understood that both the foregoing general description and the following detailed description of the present invention are exemplary and explanatory and are intended to provide further explanation of the invention as claimed.

The accompanying drawings, which are included to provide a further understanding of the invention and are incorporated in and constitute a part of this application, illustrate embodiment(s) of the invention and together with the description serve to explain the principle of the invention. In the drawings:
FIGS. 1 and 2 illustrate a laundry treating apparatus according to an embodiment of the present invention;
FIG. 3 illustrates a drawer, a tub, and a drum included in the laundry treatment apparatus and a combination relationship therebetween according to an embodiment of the invention;
FIG. 4 illustrates a guide included in the laundry treatment apparatus according to an embodiment of the invention;
FIG. 5 illustrates a illustrates a guide included in the laundry treatment apparatus according to an embodiment of the invention;
FIG. 6 illustrates a connector fastening part provided in the rear surface of the drawer;
FIG. 7 illustrates a connector coupled to the connector fastening part;
FIG. 8 illustrates a state in which the connector is coupled to the connector fastening part; and
FIGS. 9 to 13 illustrate another example in which a connector is coupled to a connector fastening part.

Reference will now be made in detail to exemplary embodiments, examples of which are illustrated in the accompanying drawings. However, the present disclosure may be embodied in many different forms and should not be construed as being limited to the embodiments set forth herein. Wherever possible, the same reference numbers will be used throughout the drawings to refer to the same or like parts.

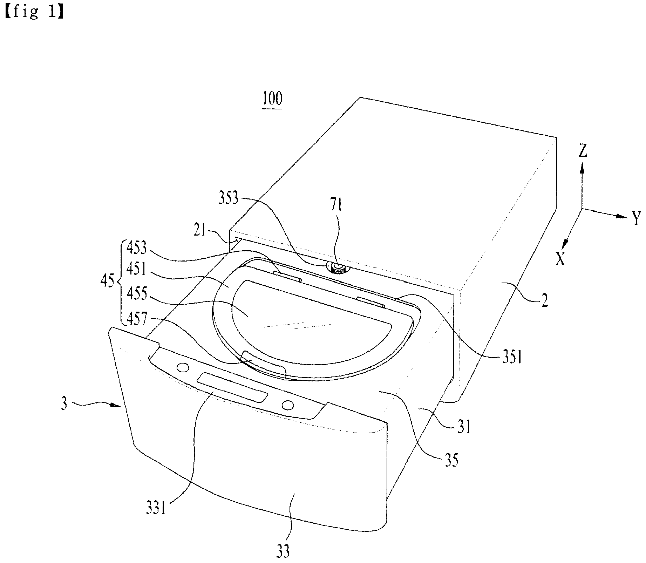

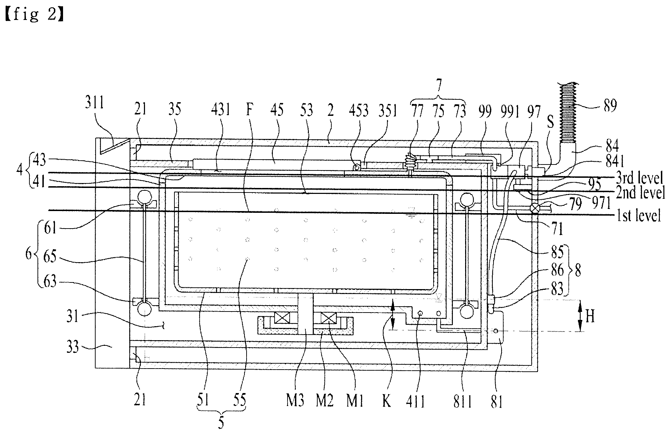

As illustrated in FIG. 1 and 2, a laundry treating apparatus according to an embodiment of the present invention includes a cabinet 2, a drawer 3 which is withdrawably provided in the cabinet 2, a tub 4 provided in the drawer 3, and a drum 5 which is rotatably provided in the tub 4.

The cabinet 2 may be provided as a means for defining the external appearance of the laundry treating apparatus, or may also be provided as a means for housing the drawer 3. When the cabinet 2 houses the drawer 3, the cabinet 2 may have an opening surface 21 such that the drawer 3 is insertable into or withdrawable from the cabinet 2.

The drawer 3 includes a drawer body 31 which defines the external appearance thereof and is withdrawable from the cabinet 2, a drawer panel 33 which forms the front surface of the drawer and opens and closes the opening surface 21 for the insertion and withdrawal of the drawer, and a drawer cover 35 which forms the upper surface of the drawer body 31.

The drawer panel 33 includes a control panel 331. The control panel 331 controls the operation of the drum 5 in the drawer 3, and may serve to display the state of operation to a user.

The drawer cover 35 may have a first through-hole 351 and a second through-hole 353 therein. The first through-hole 351 may serve as a port for the insertion or withdrawl of laundry, dry clothes, etc., and the second through-hole 353 may serve to supply washing water therethrough.

Laundry must be inserted and withdrawn through the first through-hole 351, and water must be supplied through the second through-hole 353. Therefore, it is preferable for the first through-hole 351 to have a size larger than the second through-hole 353.

In general, the drawer 3 is withdrawn forward from the cabinet 2, and an external water supply source is provided on the back of the cabinet 2. Therefore, it is preferable for the second through-hole 353 to be located behind the first through-hole 353.

In addition, since a door, which will be described later, has a structure that is opened and closed, the first through-hole 351 is preferably formed to have a rectilinear portion formed on the back thereof and a curved portion connected to both ends of the rectilinear portion.

For example, the first through-hole 351 may have a semicircular shape or a half-track shape.

The first and second through-holes 351 and 353 will be described in more detail later. As illustrated in FIG. 2, the tub 4 may include a tub body 41 which defines the external appearance thereof, a tub cover 43 which forms the upper surface of the tub body 41, and a door 45 through which the inside and outside of the tub 4 communicate with each other and through which laundry is insertable and withdrawable.

The tub body 41 is arranged inside the drawer 3. The tub body 41 may have a cylindrical shape that is partially opened at the upper surface thereof, and may include a heater 411 which heats washing water or air. The heater 411 is preferably provided in the lower portion of the tub body 41 in order to easily heat washing water. The tub cover 43 forming the upper surface of the tub body 41 may be provided with an insertion port 431 and a supply port 433, through which the inside and outside of the tub communicate with each other. The insertion port serves as a passage for the insertion of laundry or dry clothes, and the supply port 433 serves as a passage for the supply of washing water.

The insertion port 431 communicates with the first through-hole 351, and they serve as a passage for the movement of laundry or dry clothes. The supply port 433 communicates with the second through-hole 353, and they serve as a passage for the supply of washing water.

The drum 5 is rotatably arranged inside the tub 4. The drum 5 includes a drum body 51 which defines the external appearance thereof. The drum body 51 has an opening surface 53 which is opened at the upper portion thereof. The insertion port 431 provided in the tub communicates with the opening surface 53, and laundry or dry clothes may be inserted into or withdrawn from the drum body 51 through the insertion port 431 and the opening surface 53. In addition, the drum body 51 may have a drum through-hole 55 for the insertion and withdrawal of washing water.

The drum 5 may be rotated by a drive part, and may be fixed on the outer bottom of the tub body 41. The drive part includes a stator M1 and a rotor M2, which is rotated by a rotating field generated in the stator, and may rotate clockwise or counterclockwise about a drive shaft M3 within the tub body 41. The drive shaft M3 is provided so as to be perpendicular to the bottom of the tub body 41.

In addition, the tub 4 is coupled to the drawer body 31 by a tub support part 6. The tub support part 6 may include a first support part 61 provided in the drawer body 31, a second support part 63 provided in the tub body 41, and a connection part 65 which connects the first and second support parts 61 and 63.

The laundry treating apparatus 100 having the above structure include a water supply unit 7 for supplying washing water and a drainage unit 8 for discharging the washing water supplied into the laundry treating apparatus 100. The water supply unit 7 serves to supply water into the tub 4, and the drainage unit 8 serves to discharge the water stored in the tub out of the cabinet 2.

The tub 4 is supplied with washing water from the water supply unit 7. In this case, the washing water is preferably supplied until it reaches a level that is at a predetermined distance below the opening surface 53 of the drum 5.

Laundry is received in the drum 5. Therefore, if washing water is supplied up to the opening surface 53 of the drum 5, the washing water necessarily overflows into the tub 4 from the drum 5.

Accordingly, the level, which is above the bottom of the tub 4 and is at a predetermined distance below the opening surface 53 of the drum 5, may be referred to as a normal level or a first level (1^{st} level).

When washing water is supplied above the first level, the washing water overflows. The overflowing washing may not be used to wash laundry, and causes the tub 4 to be heavier. Therefore, washing water is preferably supplied up to the first level.

In addition, washing water may be supplied through the tub 4 until it reaches the opening surface 53 of the drum 5.

In this case, when washing water is supplied until it reaches the opening surface 53 of the drum 5 beyond the first level, the washing water necessarily overflows into the tub 4.

Accordingly, the level in this state may be referred to as an abnormal level or a second level (2^{nd} level).

Of course, the second level (2^{nd} level) is a theoretical maximum level up to which washing water may be supplied into the drum 5 if laundry is not present in the drum 5 or the drum 5 is not rotated.

However, when washing water reaches the tub cover 43 in the tub 4, the washing water may overflow from the tub 4.

In addition, when washing water reaches the tub cover 43, the washing water may flow to the drawer 3 from the tub 4 due to vibrations occurring when the drum 5 rotates.

The level in this state may be referred to as an overflow level or a third level (3^{rd} level). The third level (3^{rd} level) is a theoretical maximum level up to which washing water may be received in the tub 4.

In addition, even when washing water is not supplied up to the third level (3^{rd} level) in the tub 4, the washing water may reach the third level (3^{rd} level) when a large vibration occurs due to the rotation of the drum 5.

In this case, the washing water may overflow from the tub 4 even if it is not supplied up to the third level (3^{rd} level).

When the washing water overflows from the tub 4, it may flow to the drawer 3. However, since the washing water is discharged to a drainage passage to be described later, the amount of washing water in the tub 4 may be reduced.

Thus, it is necessary to include a connector 84 which prevents the washing water in the tub 4 from overflowing or being discharged therefrom. A detailed description thereof will be given later.

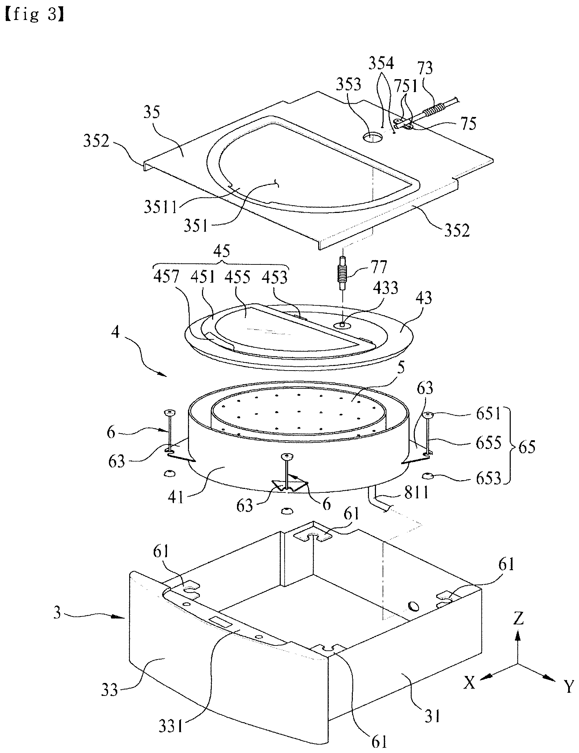

As illustrated in FIG. 3, the tub cover 43 may be provided with the door 45 for opening and closing the insertion port 431. The door 45 may include a frame 451 which is rotatably coupled to the tub cover 43 by a hinge 453, a window 455 which is provided on the frame and is made of a transparent material such that the user may check the inside of the tub body 41, and a door handle 457 which aids in detachably coupling the frame 451 to the tub cover 43.

The door 45 may open or close the tub cover 43 while rotating up or down about the hinge 453. The door 45 is preferably rotated only above the tub cover 43.

This enables the user to easily open and close the door 45, and is intended to prevent contact with washing water and laundry in the tub 4.

Therefore, the door 45 may be seated on the upper portion of the tub cover 43.

That is, the door 45 may be seated on the outer peripheral surface of the upper portion of the insertion port 431.

In this case, the through-hole 351 may have the same shape as the door 45 such that the door 45 may open and close the insertion port 431 while rotating about the hinge 453.

The door 45 may have a rectilinear portion at a position at which the hinge 453 is installed such that the door 45 is easily rotatable about the hinge 453, and may have a curved portion at a position at which the hinge 453 is not installed such that the insertion and withdrawal of laundry is easily performed therethrough.

That is, the curved portion may have any curvature as long as both ends of the curved portion may be coupled to both ends of the rectilinear portion.

For example, the door 45 may have a semicircular shape or a half-track shape.

In this case, it is preferable for the through-hole 351 to have the same shape as the door 45, and to have a size larger than the door 45.

The through-hole 351 may further include a cut portion 3511 which is formed at a position corresponding to the handle 457, such that the user may easily grip the handle 457.

In this case, the handle 457 may be disposed on the front surface of the frame 451 such that the door may be opened and closed in a balanced state.

That is, the handle 457 is preferably provided so as to have a symmetrical shape about the front central portion of the frame 451.

This is intended to prevent the door 45 from leaning to either the left or right of the handle 457 due to the self-weight of the door 45 when the door 45 is opened or closed.

The first through-hole 351 may include the cut portion 3511 which is formed at a position corresponding to the handle 457, such that the user may easily grip the door handle 457. The drawer cover 35 may further include extension ribs 352 which extend downward from both side ends thereof.

The extension ribs 352 may guide the drawer cover 35 such that they are coupled to the upper end of the drawer body 31, whereby the drawer cover 35 is fixed to the drawer body 31.

Although not shown, each of the extension ribs 352 may have a plurality of holes into which fastening members such as bolts or nuts are inserted, or may have a structure that is fitted into the drawer body 31.

The fitting may be performed by coupling a slide (not shown), which is formed in one of the drawer body 31 and the inner surface of the extension rib 352, to a rail which is formed in the other of the drawer body 31 and the extension rib 352.

In addition, the fitting may be performed by coupling a hook (not shown) and a receiving groove (not shown).

That is, the fitting may be performed in any manner as long as the extension rib 352 may be fastened to the drawer body 31.

A water supply passage 73, which will be described later, may be provided with a fastening pipe 75 which is fixed and fastened to the drawer cover 35.

The fastening pipe 75 may include fastening ribs 751 at both ends thereof, and the drawer cover 35 may further include fastening grooves 353 to which the fastening ribs 751 are coupled.

The fastening pipe 75 may serve to stably fix the water supply passage 73 when the drawer 3 vibrates due to the vibration of the tub 4.

In addition, since the fastening pipe 75 stably fixes the water supply passage 73 when the drawer 3 moves forward or rearward, it is possible to prevent damage to the water supply passage 73.

The connection part 65 may include a first connection part 651 which is seated in the first support part 61, a second connection part 653 which supports the second support part 63, and a bar 655 which connects the first and second connection parts.

It is preferable for the first connection part 651 to be seated in the first support part 61 and to have a shape that is rotatable within the first support part 61, and for the second connection part 653 to support the second support part 63 and to have a shape that is rotatable within the second support part 63.

FIG. 3 illustrates an example in which each of the first and second connection parts 651 and 653 has a spherical shape, and an example in which the contact surface between each support part and an associated connection part has a semispherical shape.

As illustrated in FIG. 3, the bar 655 may be formed so as to be perpendicular to the bottom of the cabinet 2, and the tub body 41 may be coupled to the drawer body 31 by at least three tub support parts.

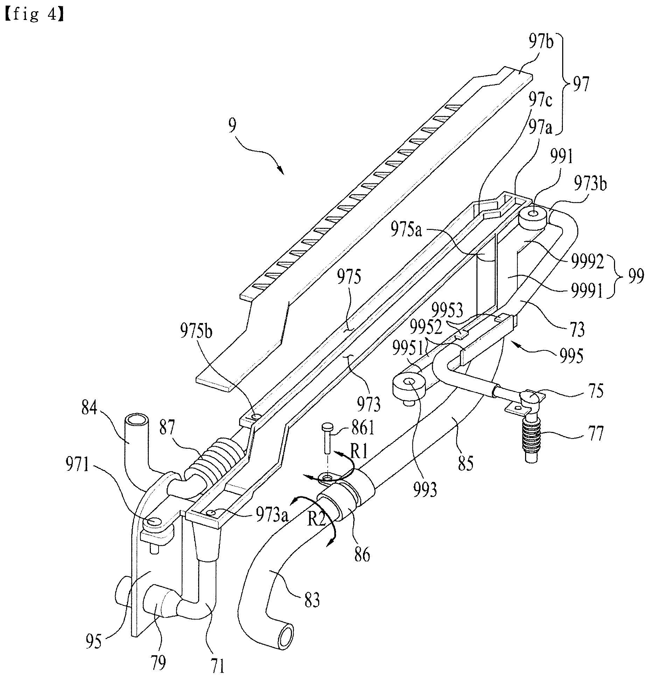

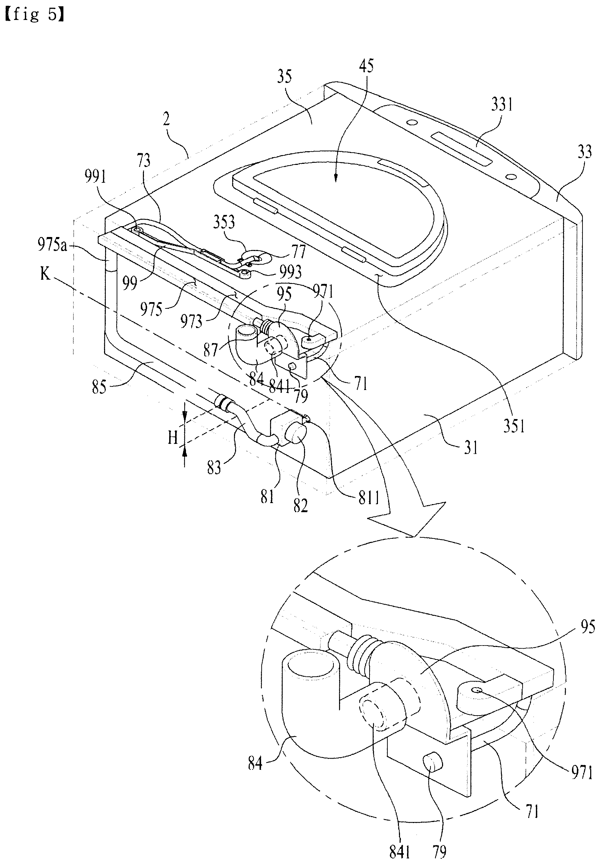

Meanwhile, if the water supply unit 7 and the drainage unit 8 are simply provided as a hose for connecting the water supply source and the supply port 433 and a hose for guiding the water in the tub to the outside of the cabinet, there is a risk that they will be damaged when the drawer 3 is withdrawn from the cabinet 2. In order to prevent this risk, the laundry treating apparatus 100 may further include a guide 9, which is provided in the cabinet 2 and aids the smooth movement of the water supply unit 7 and the drainage unit 8. The water supply unit 7, the drainage unit 8, and the guide 9 according to the embodiment of the present invention will be described with reference to FIGS. 4 and 5.

The guide 9 includes a first body 97 and a second body 99. One end of the first body 97 is rotatably connected to a support part 95 fixed to the cabinet 2, and the other end thereof is rotatably connected to one end of the second body 99. The other end of the second body 99 is rotatably connected to the drawer cover 35.

The first body 97 includes a base 97a which serves as a passage through which supplied water and discharged washing water are movable, and a cover 97b which seals the upper surface of the base 97a. In addition, the base 97a may further include a partition wall 97c therein such that the supplied water does not mix with the discharged washing water. The partition wall 97c serves to divide the base 97a into a water supply connection pipe 973, which is a passage for the movement of water supplied from the water supply source, and a drainage connection pipe 975 which is a passage for the discharge of washing water in the tub.

The first body 97 is connected, at one end thereof, to the support part 95 so as to be rotatable about a first shaft 971, and the first shaft is perpendicular to the ground. One end of the second body 99 may be connected to the other end of the first body such that the second body 99 is rotatable about a second shaft 991, and the second shaft is also perpendicular to the ground. The second body 99 is connected, at the other end thereof, to the drawer cover 35 so as to be rotatable about a third shaft 993, and the third shaft is perpendicular to the ground. Since the first and second bodies 97 and 99 are rotatable about the first, second, and third shafts 971, 991, and 993, the drawer body 31 may be smoothly inserted into or withdrawn from the cabinet 2.

The water supply unit 7 and the drainage unit 8 may be coupled to the guide 9. Due to coupling with the guide 9, it is possible to reduce damage to or tangles of the water supply unit 7 and the drainage unit 8 even when the drawer body 31 is inserted into or withdrawn from the cabinet 2.

The water supply unit 7 may include a first water supply passage 71, one end of which is connected to the support part 95 while the other end of which is connected to the water supply connection pipe 973, a water supply valve 79 which may adjust the amount of water supplied to the first water supply passage 71, and a second water supply passage.

The second water supply passage includes a first water supply pipe 73, which is a passage for supplying water from the water supply connection pipe 973 into the tub 4, a second water supply pipe 77, which is connected to the supply port 433 provided in the tub cover 43 and has a corrugated shape, and a fastening pipe 75 which connects the first and second water supply pipes. The second water supply pipe 77 is provided so as to have a corrugated shape in order to prevent the vibration of the tub 4 from being transferred to the fastening pipe 75.

The first water supply passage 71 is connected to the water supply connection pipe 973 through a water-supply-connection-pipe introduction port 973a, and the first water supply pipe 73 is connected to the water supply pipe 973 through a water-supply-connection-pipe discharge port 973b.

The supply path of water from the water supply source will be described below. The water supplied from the water supply source is introduced into the first water supply passage 71, and is then introduced into the water supply connection pipe 973 through the water-supply-connection-pipe introduction port 973a. The water introduced into the water supply connection pipe 973 is supplied to the first water supply pipe 73 through the water-supply-connection-pipe discharge port 973b, and the water supplied to the first water supply pipe is finally supplied into the tub body 41 through the fastening pipe 75 and the second water supply pipe 77.

The first water supply pipe 73 may have a hose shape made of rubber, or a corrugated shape. The second body 99 serves to support the first water supply pipe 73. The second body 99 may have a water-supply-pipe receiving part 995 having a protrusion shape, and the water-supply-pipe receiving part 995 prevents the first water supply pipe 73 from being separated from the second body 99. In addition, the first water supply pipe 73 may be detachably provided in the second body 99.

The water-supply-pipe receiving part 995 may include a support 9951 which extends from the lower portion of the third shaft 993, receiving ribs 9952 which extend upward from both ends of the support, and protruding portions 9953 which protrude from the free ends of the receiving ribs 9952 so as to be close to each other parallel to the support 9951.

The water-supply-pipe receiving part 995 may have an opened upper surface.

The support 9951 and the receiving ribs 9952 may be fixed in the state in which the first water pipe 73 is received in the water-supply-pipe receiving part 995, and the protruding portions 9953 may prevent the first water supply pipe 73 from being separated or dislocated due to external impact.

The second body 99 may include an inclined portion 9991, which is connected to the second shaft 991 and is spaced apart from the first body 97.

The inclined portion 9991 may prevent the first and second bodies 97 and 99 from being damaged due to collision therebetween when the tub 4 vibrates, by maintaining the distance from the first body 97.

In addition, the water supply pipes 73 and 77 may allow the length that extends from the second body 99 to the second through-hole 353 to be minimized, thereby maximizing stability.

The second body 99 further includes a first rectilinear portion 9992 provided parallel to the first body 97, and the inclined portion 9991 may extend from the end of the first rectilinear portion 9992.

The water-supply-pipe receiving part 995 may extend from the end of the inclined portion 9991.

The drainage unit 8 may include a drainage pump 82 which is fixed to the rear surface of the drawer 3 to discharge the washing water stored in the tub body 41, a connection passage through which the washing water discharged by the drainage pump 82 is guided out of the cabinet 2, a connector 84 which is provided outside the cabinet 2 and prevents the washing water discharged from the connection passage from leaking when the drainage pump 82 is not operated, a drainage passage 89 (see FIG. 2) which is connected to the connector 84 and through which washing water is finally discharged out of the laundry treating apparatus.

The connection passage includes a first connection passage 83, one end of which is connected to a drainage chamber 81 provided with the drainage pump 82 while the other end of which is connected to a first drainage pipe 85, the first drainage pipe 85 which is connected to the first connection passage 83 through a passage connection part 86, and a second drainage pipe 87, one end of which is connected to the drainage connection pipe 975 while the other end of which is connected to the support part 95.

In more detail, the washing water in the tub 4 is introduced into the drainage connection pipe 975 through the first drainage pipe 85 via the first connection passage 83 using the drainage pump 82. In this case, the washing water in the first drainage pipe 85 is introduced into the drainage connection pipe 975 through a drainage-connection-pipe introduction port 975a. The washing water introduced into the drainage connection pipe 975 is discharged to the second drainage pipe 87 through a drainage-connection-pipe discharge port 975b, and the washing water introduced into the second drainage pipe 87 is discharged to the connector 84 provided outside the cabinet 2.

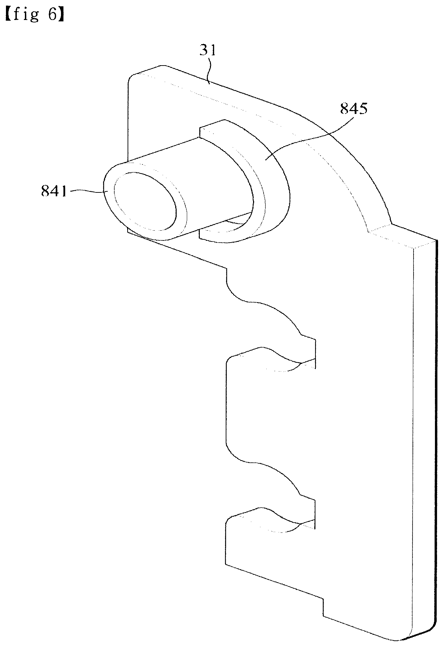

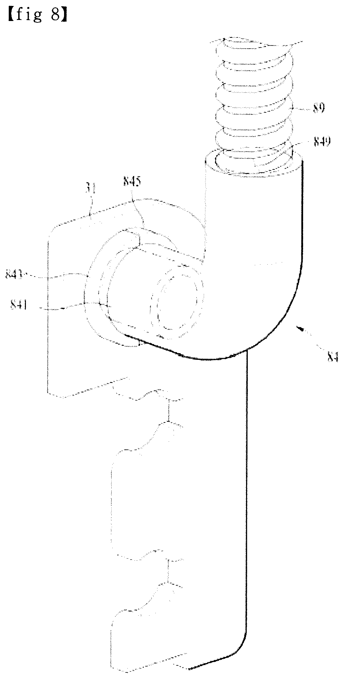

The connector 84 serves to prevent the washing water introduced into the drainage pipe 87 from flowing out of the tub 4. Referring to FIGS. 6 to 8, the connector 84 is connected to a connector fastening part 841 which is provided at the end of the connection passage while a portion thereof protrudes out of the cabinet 2. In more detail, the connector fastening part 841 is connected to a connector inlet port 847 corresponding to the inlet of the connector 84 which is supplied with washing water from the connection passage.

In addition, the connector 84 includes a connector outlet port 849 which is an outlet for discharging the introduced washing water. That is, the washing water, which is introduced into the connector inlet port 847 from the connection passage, is discharged to the connector outlet port 849 via the inside of the connector 84.

The connector inlet port 847 or the connector outlet port 849 may be provided at a point (S) higher than the third level (3^{rd} level), the third level being a maximum level of water which may be stored in the tub 4. This is intended to prevent the washing water in the tub 4 from leaking through the connector outlet port 849 in the process of washing laundry.

In the drainage unit 8 having the above structure, when the operation of the drainage pump 82 is stopped, the washing water remaining in the connector 84 and the connection passage will be introduced into the tub 4 by self-weight thereof. Moreover, when a level (K) of water introduced into the tub is higher than the portions 83 and 85 of the connection passage, water remains in the connection passage.

When washing water remains in the connection passage, the washing water may freeze when the temperature of outside air is low as in winter. For this reason, the connection passage may be damaged when the drawer 3 is withdrawn from the cabinet 2.

Accordingly, when the connection passage is provided at a position (H) higher than the level (K) defined in the tub due to the movement of water, which is stored between the point (S) higher than the third level and the drainage pump 82, to the tub 4, it is possible to prevent water from remaining in the connection passage. It is based on the premise that the reference positions for measuring the level (K) and the position (H) are the same as each other, and it can be seen that a chamber communication pipe 811 is illustratively provided as the reference position, as illustrated in FIG. 4.

Meanwhile, the drum 5 is rotated by the drive part when washing is performed in the laundry treating apparatus 100. In this case, a water stream occurs in the washing water in the tub body 41 due to the rotation of the drum 5, and vibrations occur in the tub and the drainage unit 8 and the guide 9, which are adjacent thereto, due to the occurrence of the water stream. Due to the water stream, the vibrations, or the combination thereof, the washing water, which remains in the second drainage pipe 87 connected to the connector 84 and the drainage connection pipe 975 adjacent to the second drainage pipe, may leak out of the cabinet through the connector fastening part 841 provided at the end of the connection passage.

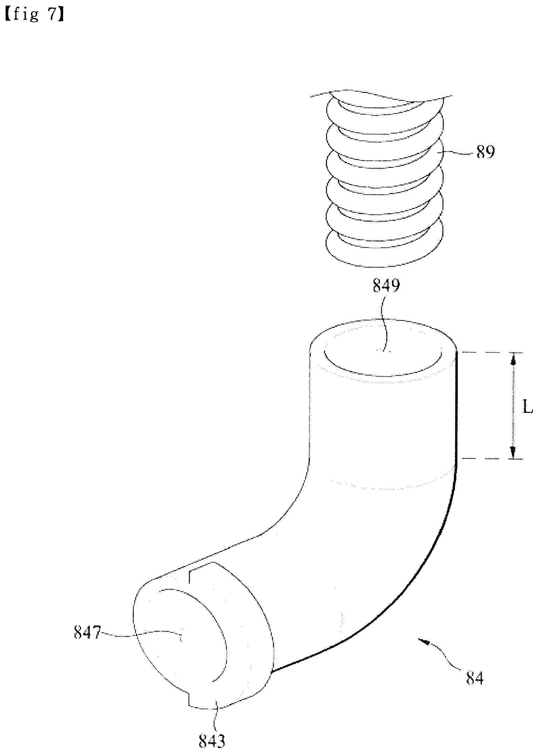

In order to resolve these problems, the connector outlet port 849 may be provided at a position higher the connector inlet port 847, as illustrated in FIG. 7.

The connector inlet port 847 or the connector outlet port 849 are provided at a point (S) equal to or higher than the maximum height (F) of washing water which may be received in the tub body 41 (see FIG. 2). In this case, washing water does not generally leak, but some of washing water may leak in the above-mentioned situation. Therefore, when the connector outlet port 849 is provided at a position that is at a predetermined distance above the connector inlet port 847, it is possible to remarkably prevent washing water from leaking.

FIG. 7 illustrates that the connector outlet port 849 is provided at a position that is at a distance of "L" above the uppermost portion of the connector inlet port 847.

This is intended to be exemplary only, and the connector outlet port 849 may any shape as long as the connector outlet port 849 is provided at a position higher than the connector inlet port 847.

In addition, the connector outlet port 849 may be directed in any direction as long as the connector outlet port 849 is provided at a position higher than the connector inlet port 847. In the embodiment of the present invention, the connector outlet port 849 is directed upward. That is, the connector outlet port 849 may be provided parallel to the ground.

As described above, the connector outlet port 849 is preferably provided at a position (L) higher than the maximum height of the connector inlet port 847 in order to more securely prevent the leakage of washing water, and the drainage passage 89 may be detachably provided in the connector outlet port 849. However, the drainage passage 89 may be integrally formed with the connector outlet port 849.

The drainage passage 89 may be made of any material, but it preferably has a hose shape that is made of rubber such that the drainage direction is easily adjustable.

In order for the connector 84 to properly perform the above functions, position guide parts may be provided in the connector inlet port 847 and the connector fastening part 841. The position guide parts prevent the connector 84 from rotating after it is coupled to the connector fastening part.

Hereinafter, the structure in which the connector 84 is connected to the connector fastening part 841 corresponding to the end of the connection passage protruding out of the cabinet 2 will be described with reference to FIGS. 6 to 8.

In the embodiment of the present invention, a first position guide part 843 may be provided in a portion of the edge of the connector inlet port 847, and a second position guide part 845 may be provided in the periphery of the connector fastening part 841.

When the connector inlet port 847 is coupled to the connector fastening part 841, the first and second position guide parts 843 and 845 come into contact with each other. That is, the second position part 845 forms a remaining portion of the edge of the connector inlet port 847, in which the first guide part 843 is not formed. Accordingly, it is possible to reduce a risk that the connector outlet port 849 will be located at a position lower than the connector inlet port 847 due to the rotation of the connector when the connector 84 is coupled to the connector fastening part 841.

In another embodiment of the present invention, a connector inlet port 847 is provided with a first position guide part, which is located in the same plane as the connector inlet port and has a ring shape, and a second position guide part 845 located in the periphery of a connector fastening part 841 may protrude so as to have a protrusion shape. When the connector inlet port 847 is coupled to the connector fastening part 841, the protrusion-shaped second position guide part 845 may be inserted into the ring-shaped first position guide part. That is, the coupling of the first and second position guide parts prevents the rotation of a connector 84 even when the connector is coupled to the connector fastening part. In addition the first and second position guide parts may be provided as a plurality of pairs consisting of first and second position guide parts.

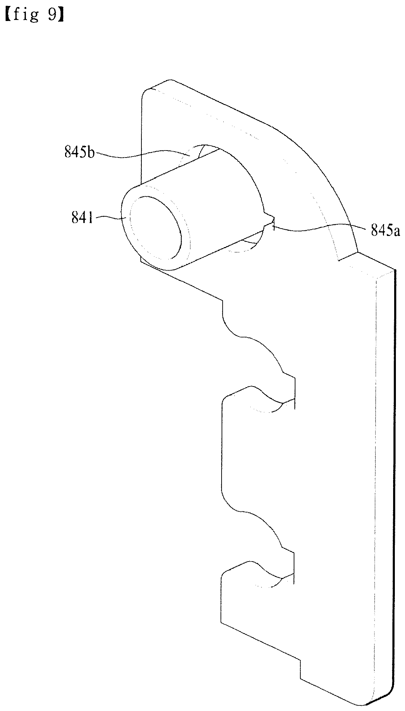

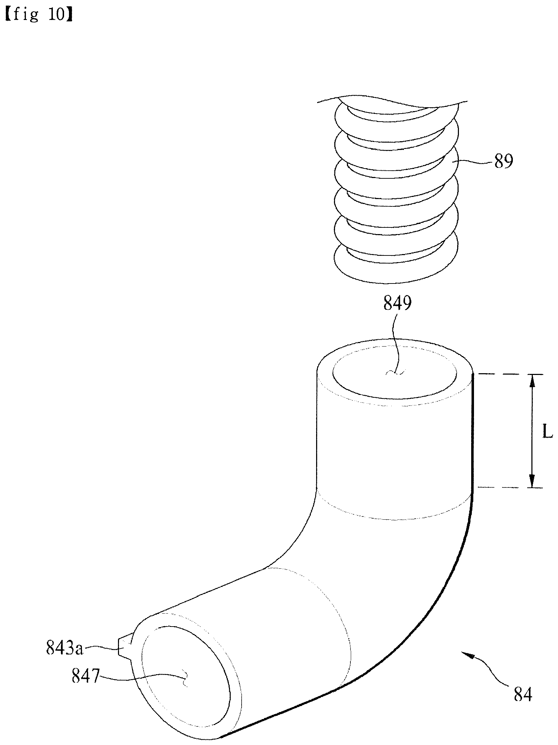

FIGS. 9 and 10 illustrate another example of position guide parts. The structure except for the position guide parts is identical to that of the above embodiments, and a detailed description thereof will be omitted.

A connector inlet port 847 may be provided with a protrusion portion 843a in the same plane as the connector inlet port 847, and a protrusion groove 845a corresponding to the protrusion portion 843a may be provided in the periphery of a connector fastening part 841. In addition, the periphery of a connector fastening part 841 may be provided with a circular groove 845b, which is located in the same plane as the protrusion groove 845a and has a shape corresponding to that of the connector inlet port 847.

Accordingly, when the connector inlet port 847 is coupled to the connector fastening part 841, the protrusion portion 843a is coupled to the protrusion groove 845a and the connector inlet port 847 is coupled to the circular groove 845b, thereby preventing the rotation of a connector 845 after it is coupled to the connector fastening part. In addition, the protrusion portion 843a and the protrusion groove 845a may be provided as a plurality of pairs consisting of protrusion portions and protrusion grooves.

In order to more securely couple the connector inlet port 847 and the connector fastening part 841, magnets (not shown) may be respectively provided at the coupling portions between the connector inlet port 847 and the connector fastening part 841.

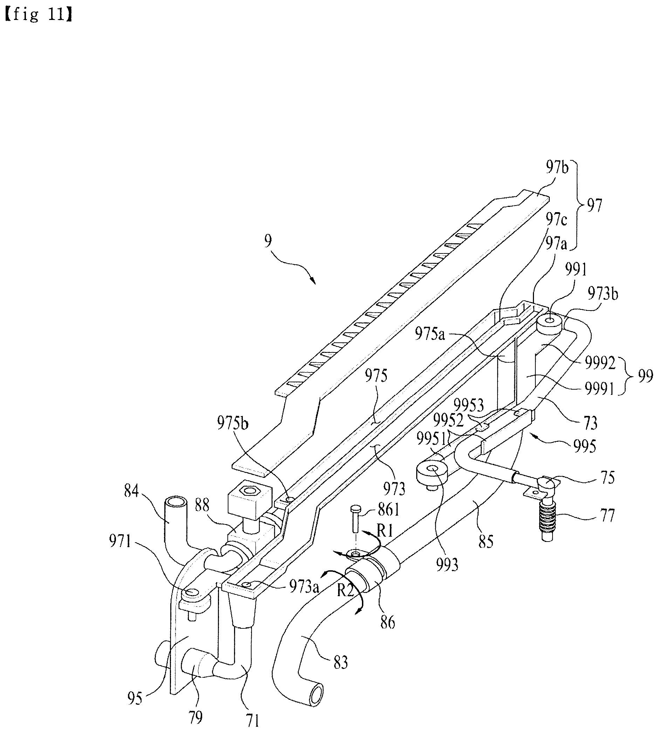

FIG. 11 illustrates another example of preventing washing water in the tub 4 from being randomly discharged.

The laundry treating apparatus according to the embodiment of the present invention may further include a valve 88, which is provided in at least one of the drainage pump 82, the connection passage including the first connection passage 83 and the first and second drainage pipes 85 and 87, and the connector 84, so as to adjust the flow rate of washing water passing through the drainage pump 82, the connection passage, and the connector 84.

That is, the valve 88 may prevent the washing water in the tub 4 from being actively discharged, and may prevent the washing water in the tub 4 from being randomly discharged.

The valve 88 may be an electrically controlled solenoid valve. The valve 88 may be provided in at least one of the drainage pump 82, the connection passage, and the connector 84, so as to open at least one of the drainage pump 82, the connection passage, and the connector 84 in response to a drainage signal from a controller.

Although FIG. 11 illustrates that the valve 88 is provided in the second drainage pipe 87 of the connection passage, but the present invention does not exclude that the valve is provided in another one of the above components.

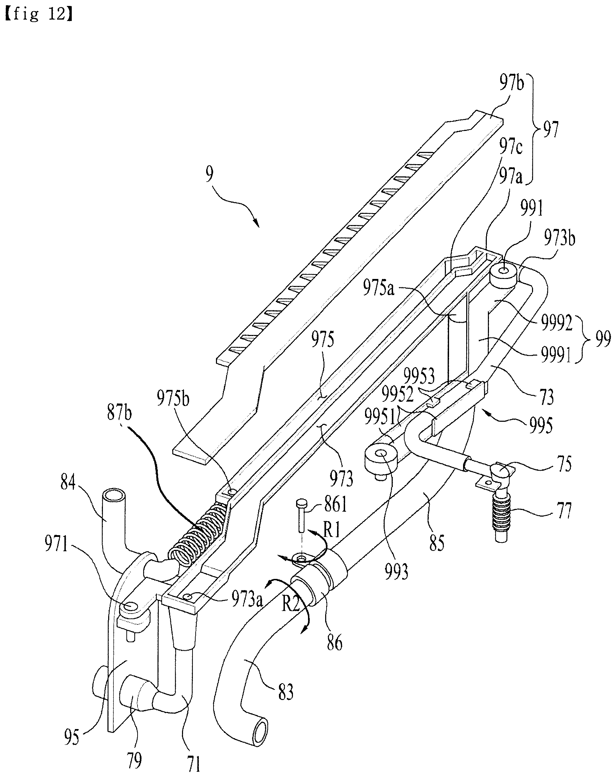

FIG. 12 illustrates still another example of preventing washing water in the tub 4 from being randomly discharged.

In the laundry treating apparatus according to the embodiment of the present invention, a connection passage includes a first connection passage 83, one end of which is connected to the drainage pump, a first drainage pipe 85, and a second drainage pipe 87b through which the other end of the first connection passage communicates with the connector inlet port 847. The second drainage pipe 87b may have a certain diameter that extends from one side of the upper surface of the tub to the other side thereof, and may extend by rotating at least once.

The second drainage pipe 87b may have a twisted shape or a consistent ring shape.

That is, the second drainage pipe 87b is provided in the form of a long passage, which may lead to maximization of passage resistance.

Accordingly, the washing water passing through the second drainage pipe 87 does not flow forward due to the passage resistance, but may remain or return due to the self-weight thereof.

That is, it is necessary to generate a pressure in the drainage pump 82 in order to overcome the passage resistance.

In other words, the washing water in the tub 4 may be discharged to the connector 84 only when the drainage pump 82 is operated, and the washing water may not pass through the second drainage pipe 87b due to only vibrations of the tub 4 and the drum 5.

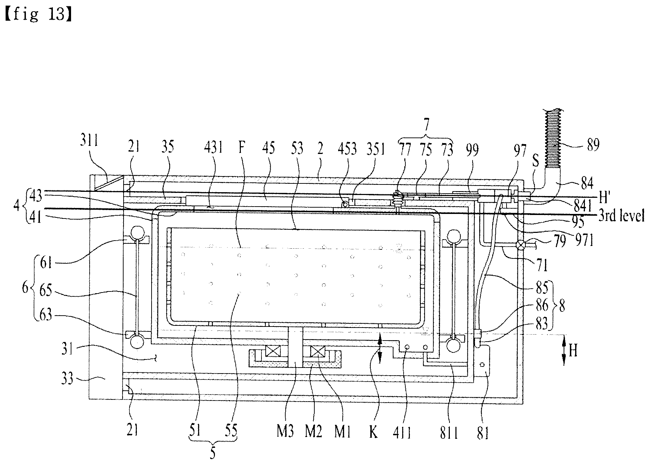

FIG. 13 illustrates still a further example of preventing washing water in the tub 4 from being randomly discharged.

Similar to the above description, a connection passage includes a first connection passage 83, one end of which is connected to the drainage pump 82, a first drainage pipe 85, and a second drainage pipe 87 through which the other end of the first connection passage 83 communicates with the connector inlet port. In this case, the second drainage pipe 87 may be provided at a position higher than the upper surface of the tub.

That is, the second drainage pipe 87 may be provided at a position higher than the tub cover 43 of the tub 4.

Consequently, the head of the second drainage pipe 87 and the connector 84 connected to the second drainage pipe 87 is increased, and thus it is possible to prevent the washing water received in the tub 4 from flowing to the connector 84.

As is apparent from the above description, the present invention has an effect of preventing water stored in a tub from leaking through a drainage unit in the process of washing laundry.

It will be apparent to those skilled in the art that various modifications and variations can be made in the present invention without departing from the scope of the invention. Thus, it is intended that the present invention covers the modifications and variations of this invention provided they come within the scope of the appended claims.

## Claims

1. A laundry treating apparatus comprising:
a cabinet (2);
a drawer (3) configured to be withdrawable from the cabinet (2);
a tub (4) provided in the drawer (2) and adapted to receive washing water;
a drum (5) rotatably provided in the tub (4) and adapted to receive laundry;
a support part (95) fixed to the cabinet (2);
a guider (9) including a first body (97) and a second body (99), wherein one end of the first body (97) is rotatably connected to the support part (95), and the other end is rotatably connected to one end of the second body (99), wherein the other end of the second body (99) is rotatably connected to the drawer (3);
a drain unit (8) includes a drainage pump (82) allowing the washing water in the tub (4) to be discharged out of the tub (4);
a connection passage (83, 85, 87) coupled to the first body (97) and guiding the washing water discharged by the drainage pump (82) out of the cabinet (2); and
a connector (84) communicating with the connection passage (83, 85, 87) and provided on an outer surface of the cabinet (2) such that the washing water supplied to the connection passage is guided out of the cabinet (2),
**characterized in that** a part of the connection passage (83, 85, 87) is provided at a position higher than a level, K, of the tub (4) such that remaining water in the connection passage (83, 85, 87) is introduced into the tub (4) when the operation of the drainage pump (82) stops,
the connector (84) comprises a connector inlet port (847) into which washing water is introduced, and a connector outlet port (849) from which washing water is discharged,
and the connector inlet port (847) and the connector outlet port (849) are provided at a point higher than a maximum level of washing water stored in the tub (4).

2. The laundry treating apparatus according to claim 1, wherein the connector outlet port (849) is provided at a position higher than a upper side of the connector inlet port (847).

3. The laundry treating apparatus according to any one of claims 1 to 2, wherein cross-section of the connector outlet port (849) is provided parallel to the ground.

4. The laundry treating apparatus according to any one of claims 1 to 3, further comprising:
a connector fastening part (841) provided at an end of the connection passage (83, 85, 87), and fastened to the connector inlet port (847); and
position guide parts (843, 845) provided in a periphery of the connector fastening part (841) and the connector inlet port (847), the position guide parts (843, 845) serving to fix the connector (84) in place when the connector inlet port (847) is coupled to the connector fastening part (841).

5. The laundry treating apparatus according to claim 4, wherein the position guide parts (843, 845) comprise:
a first position guide part (843) provided in the connector inlet port (847); and
a second position guide part (845) provided in the periphery of the connector fastening part (841), and
wherein rotation of the connector (84) is prevented, when the connector inlet port (847) is coupled to the connector fastening part (841), by an interaction between the first and second position guide parts (843, 845).

6. The laundry treating apparatus according to claim 5, wherein:
the first position guide part (843) is provided in a portion of an edge of the connector inlet port (847);
the second position guide part (845) is provided in a portion of the periphery of the connector fastening part (841); and
when the connector inlet port (847) is coupled to the connector fastening part (841), the second position guide part (845) forms a remaining portion of the edge of the connector inlet port (847).

7. The laundry treating apparatus according to claim 5, wherein the first position guide part (843) has a ring shape, the second position guide part (845) has a protrusion shape, and the second position guide part (845) is inserted into the ring-shaped first position guide part (843) when the connector inlet port (847) is coupled to the connector fastening part (841).

8. The laundry treating apparatus according to any one of claims 5 to 7, wherein the first and second position guide parts (843, 845) consist of a plurality of first and second position guide parts (843, 845).

9. The laundry treating apparatus according to any one of claims 4 to 8, wherein the position guide parts (843, 845) comprise:
a protrusion portion (843a) provided in the connector inlet port (847);
a circular groove (845b) provided in the periphery of the connector fastening part (841), the connector inlet port (847) being seated in the circular groove (845b); and
a protrusion groove (845a) provided in the circular groove (845b), and coupled to the protrusion portion.

10. The laundry treating apparatus according to claim 9, wherein the protrusion portion and the protrusion groove (845a) consist of a plurality of protrusion portions (843a) and protrusion grooves (845a).

11. The laundry treating apparatus according to any one of claims 1 to 10,
wherein preferably the direction in which the drawer (3) is withdrawn differs from the direction of a rotary shaft of the drum (5).

12. The laundry treating apparatus according to any one of claims 1 to 11, wherein:
the connection passage comprises a first connection passage (83), one end of which is connected to the drainage pump (82), and a second drainage pipe (87) through which the other end of the first connection passage (83) communicates with the connector inlet port (847); and
the second drainage pipe (87) is provided at a position higher than an upper surface of the tub (4), or
the second drainage pipe (87) that extends from one side of an upper surface of the tub (4) to the other side thereof, and extends by rotating at least once.

13. The laundry treating apparatus according to any one of claims 1 to 12, further comprising a valve (88) provided in at least one of the drainage pump (82), the connection passage, and the connector (84), so as to adjust a flow rate of washing water passing through the drainage pump (82), the connection passage, and the connector (84), wherein the valve (88) is preferably an electrically controlled solenoid valve.

## Patentansprüche

1. Wäschebehandlungsvorrichtung, die aufweist:
ein Gehäuse (2);
eine Schublade (3), die konfiguriert ist, aus dem Gehäuse (2) herausgezogen zu werden;
einen Bottich (4), der in der Schublade (2) vorgesehen und eingerichtet ist, Waschwasser aufzunehmen;
eine Trommel (5), die drehbar in dem Bottich (4) vorgesehen und eingerichtet ist, Wäsche aufzunehmen;
einen Halteteil (95), der an dem Gehäuse (2) befestigt ist;
eine Führung (9), die einen ersten Körper (97) und einen zweiten Körper (99) aufweist, wobei ein Ende des ersten Körpers (97) drehbar mit dem Halteteil (95) verbunden ist und das andere Ende drehbar mit einem Ende des zweiten Körpers (99) verbunden ist, wobei das andere Ende des zweiten Körpers (99) drehbar mit der Schublade (3) verbunden ist;
eine Ablaufeinheit (8), die eine Ablaufpumpe (82) aufweist, die es ermöglicht, dass das Waschwasser in dem Bottich (4) aus dem Bottich (4) abgeleitet wird;
einen Verbindungskanal (83, 85, 87), der mit dem ersten Körper (97) gekoppelt ist und das von der Ablaufpumpe (82) abgegebene Waschwasser aus dem Gehäuse (2) herausführt; und
ein Verbindungsstück (84), das mit dem Verbindungskanal (83, 85, 87) in Verbindung steht und an einer Außenfläche des Gehäuses (2) vorgesehen ist, so dass das dem Verbindungskanal zugeführte Waschwasser aus dem Gehäuse (2) herausgeführt wird,
**dadurch gekennzeichnet, dass** ein Teil des Verbindungskanals (83, 85, 87) an einer Position vorgesehen ist, die höher als ein Niveau, K, des Bottichs (4) liegt, so dass restliches Wasser im Verbindungskanal (83, 85, 87) in den Bottich (4) eingeleitet wird, wenn der Betrieb der Ablaufpumpe (82) stoppt,
das Verbindungsstück (84) eine Verbindungsstück-Einlassöffnung (847), in die Waschwasser eingeleitet wird, und eine Verbindungsstück-Auslassöffnung (849) aufweist, aus der Waschwasser abgeleitet wird,
und die Verbindungsstück-Einlassöffnung (847) und die Verbindungsstück-Auslassöffnung (849) an einem Punkt vorgesehen sind, der höher als ein maximaler Pegel des in dem Bottich (4) gespeicherten Waschwassers ist.

2. Wäschebehandlungsvorrichtung nach Anspruch 1, wobei die Verbindungsstück-Auslassöffnung (849) an einer Position vorgesehen ist, die höher als eine Oberseite der Verbindungsstück-Einlassöffnung (847) ist.

3. Wäschebehandlungsvorrichtung nach einem der Ansprüche 1 bis 2, wobei der Querschnitt der Verbindungsstück-Auslassöffnung (849) parallel zum Boden verläuft.

4. Wäschebehandlungsvorrichtung nach einem der Ansprüche 1 bis 3, die ferner aufweist:
einen Verbindungsstück-Befestigungsteil (841), der an einem Ende des Verbindungskanals (83, 85, 87) vorgesehen ist und an der Verbindungsstück-Einlassöffnung (847) befestigt ist; und
Positionsführungsteile (843, 845), die in einem Umfang des Verbindungsstück-Befestigungsteils (841) und der Verbindungsstück-Einlassöffnung (847) vorgesehen sind, wobei die Positionsführungsteile (843, 845) dazu dienen, das Verbindungsstück (84) an seinem Platz zu fixieren, wenn die Verbindungsstück-Einlassöffnung (847) mit dem Verbindungsstück-Befestigungsteil (841) gekoppelt ist.

5. Wäschebehandlungsvorrichtung nach Anspruch 4, wobei die Positionsführungsteile (843, 845) aufweisen:
einen ersten Positionsführungsteil (843), der in der Verbindungsstück-Einlassöffnung (847) vorgesehen ist; und
einen zweiten Positionsführungsteil (845), der am Umfang des Verbindungsstück-Befestigungsteils (841) vorgesehen ist, und
wobei eine Drehung des Verbindungsstücks (84) verhindert wird, wenn die Verbindungsstück-Einlassöffnung (847) mit dem Verbindungsstück-Befestigungsteil (841) gekoppelt ist, durch eine Wechselwirkung zwischen dem ersten und dem zweiten Positionsführungsteil (843, 845).

6. Wäschebehandlungsvorrichtung nach Anspruch 5, wobei:
der erste Positionsführungsteil (843) in einem Abschnitt eines Randes der Verbindungsstück-Einlassöffnung (847) vorgesehen ist;
der zweite Positionsführungsteil (845) in einem Abschnitt des Umfangs des Verbindungsstück-Befestigungsteils (841) vorgesehen ist; und
wenn die Verbindungsstück-Einlassöffnung (847) mit dem Verbindungsstück-Befestigungsteil (841) gekoppelt ist, der zweite Positionsführungsteil (845) einen restlichen Abschnitt des Randes der Verbindungsstück-Einlassöffnung (847) bildet.

7. Wäschebehandlungsvorrichtung nach Anspruch 5, wobei der erste Positionsführungsteil (843) eine Ringform hat, der zweite Positionsführungsteil (845) eine Vorsprungsform hat und der zweite Positionsführungsteil (845) in den ringförmigen ersten Positionsführungsteil (843) eingeführt wird, wenn die Verbindungsstück-Einlassöffnung (847) mit dem Verbindungsstück-Befestigungsteil (841) gekoppelt wird.

8. Wäschebehandlungsvorrichtung nach einem der Ansprüche 5 bis 7, wobei der erste und zweite Positionsführungsteil (843, 845) aus mehreren ersten und zweiten Positionsführungsteilen (843, 845) bestehen.

9. Wäschebehandlungsvorrichtung nach einem der Ansprüche 4 bis 8, wobei die Positionsführungsteile (843, 845) aufweisen:
einen Vorsprungsabschnitt (843a), der in der Verbindungsstück-Einlassöffnung (847) vorgesehen ist;
eine kreisförmige Nut (845b), die am Umfang des Verbindungsstück-Befestigungsteils (841) vorgesehen ist, wobei die Verbindungsstück-Einlassöffnung (847) in der kreisförmigen Nut (845b) sitzt; und
eine Vorsprungsnut (845a), die in der kreisförmigen Nut (845b) vorgesehen und mit dem Vorsprungsabschnitt gekoppelt ist.

10. Wäschebehandlungsvorrichtung nach Anspruch 9, wobei der Vorsprungsabschnitt und die Vorsprungsnut (845a) aus mehreren Vorsprungsabschnitten (843a) und Vorsprungsnuten (845a) bestehen.

11. Wäschebehandlungsvorrichtung nach einem der Ansprüche 1 bis 10, wobei vorzugsweise die Richtung, in der die Schublade (3) herausgezogen wird, sich von der Richtung einer Drehwelle der Trommel (5) unterscheidet.

12. Wäschebehandlungsvorrichtung nach einem der Ansprüche 1 bis 11, wobei:
der Verbindungskanal einen ersten Verbindungskanal (83), von dem ein Ende mit der Ablaufpumpe (82) verbunden ist, und ein zweites Ablaufrohr (87) aufweist, durch das das andere Ende des ersten Verbindungskanals (83) mit der Verbindungsstück-Einlassöffnung (847) in Verbindung steht; und
das zweite Ablaufrohr (87) an einer Position vorgesehen ist, die höher als eine obere Fläche des Bottichs (4) liegt, oder
das zweite Ablaufrohr (87) sich von einer Seite einer oberen Fläche des Bottichs (4) zu dessen anderer Seite erstreckt und sich durch mindestens eine Drehung erstreckt.

13. Wäschebehandlungsvorrichtung nach einem der Ansprüche 1 bis 12, die ferner ein Ventil (88) aufweist, das in der Ablaufpumpe (82) und/oder dem Verbindungskanal und/oder dem Verbindungsstück (84) vorgesehen ist, um eine Durchflussrate des Waschwassers einzustellen, das durch die Ablaufpumpe (82), den Verbindungskanal und/oder das Verbindungsstück (84) fließt, wobei das Ventil (88) vorzugsweise ein elektrisch gesteuertes Magnetventil ist.

## Revendications

1. Machine à traiter le linge, comprenant :
une carrosserie (2) ;
un tiroir (3) prévu pour être retirable de la carrosserie (2) ;
une cuve (4) disposée dans le tiroir (2) et destinée à recevoir de l'eau de lavage ;
un tambour (5) disposé de manière rotative dans la cuve (4) et destiné à recevoir du linge ;
une pièce de support (95) fixée à la carrosserie (2) ;
un guidage (9) comprenant un premier corps (97) et un deuxième corps (99), une extrémité du premier corps (97) étant raccordée de manière rotative à la pièce de support (95), et l'autre extrémité étant raccordée de manière rotative à une extrémité du deuxième corps (99), l'autre extrémité du deuxième corps (99) étant raccordée de manière rotative au tiroir (3) ;
une unité de vidange (8) comportant une pompe de vidange (82) permettant à l'eau de lavage contenue dans la cuve (4) d'être évacuée de la cuve (4) ;
un passage de connexion (83, 85, 87) raccordé au premier corps (97) et guidant l'eau de lavage refoulée par la pompe de vidange (82) hors de la carrosserie (2) ; et
un raccord (84) communiquant avec le passage de connexion (83, 85, 87) et prévu sur une surface extérieure de la carrosserie (2), de manière à conduire l'eau de lavage refoulée vers le passage de connexion hors de la carrosserie (2),
**caractérisée en ce qu'**une partie du passage de connexion (83, 85, 87) est prévue à un emplacement plus élevé que le niveau K de la cuve (4), de manière à introduire l'eau restant dans le passage de connexion (83, 85, 87) dans la cuve (4) lorsque le fonctionnement de la pompe de vidange (82) est arrêté,
le raccord (84) présente un orifice d'entrée de raccord (847) où l'eau de lavage est introduite, et un orifice de sortie de raccord (849) duquel l'eau de lavage est évacuée,
et l'orifice d'entrée de raccord (847) et l'orifice de sortie de raccord (849) sont situés à un emplacement plus élevé que le niveau maximum d'eau de lavage stockée dans la cuve (4).

2. Machine à traiter le linge selon la revendication 1, où l'orifice de sortie de raccord (849) est prévu à un emplacement plus élevé qu'un côté supérieur de l'orifice d'entrée de raccord (847).

3. Machine à traiter le linge selon la revendication 1 ou la revendication 2, où la section transversale de l'orifice de sortie de raccord (849) est prévue parallèlement au sol.

4. Machine à traiter le linge selon l'une des revendications 1 à 3, comprenant en outre :
une pièce de fixation de raccord (841) prévue à une extrémité du passage de connexion (83, 85, 87), et fixée à l'orifice d'entrée de raccord (847) ; et
des pièces de guidage de position (843, 845) prévues à la périphérie de la pièce de fixation de raccord (841) et de l'orifice d'entrée de raccord (847), lesdites pièces de guidage de position (843, 845) servant à fixer le raccord (84) en place lorsque l'orifice d'entrée de raccord (847) est raccordé à la pièce de fixation de raccord (841).

5. Machine à traiter le linge selon la revendication 4, où les pièces de guidage de position (843, 845) comprennent :
une première pièce de guidage de position (843) prévue dans l'orifice d'entrée de raccord (847) ; et
une deuxième pièce de guidage de position (845) prévue à la périphérie de la pièce de fixation de raccord (841), et
où la rotation du raccord (84) est empêchée, lorsque l'orifice d'entrée de raccord (847) est raccordé à la pièce de fixation de raccord (841), par interaction entre la première et la deuxième pièces de guidage de position (843, 845).

6. Machine à traiter le linge selon la revendication 5, où :
la première pièce de guidage de position (843) est prévue dans une partie du bord de l'orifice d'entrée de raccord (847) ;
la deuxième pièce de guidage de position (845) est prévue dans une partie de la périphérie de la pièce de fixation de raccord (841) ; et où,
lorsque l'orifice d'entrée de raccord (847) est raccordé à la pièce de fixation de raccord (841), la deuxième pièce de guidage de position (845) forme la partie restante du bord de l'orifice d'entrée de raccord (847).

7. Machine à traiter le linge selon la revendication 5, où la première pièce de guidage de position (843) est en forme d'anneau, la deuxième pièce de guidage de position (845) est en forme de saillie, et la deuxième pièce de guidage de position (845) est insérée dans la première pièce de guidage de position en forme d'anneau (843) lorsque l'orifice d'entrée de raccord (847) est raccordé à la pièce de fixation de raccord (841).

8. Machine à traiter le linge selon l'une des revendications 5 à 7, où la première et la deuxième pièces de guidage de position (843, 845) consistent en une pluralité de pièces de guidage de première et de deuxième position (843, 845).

9. Machine à traiter le linge selon l'une des revendications 4 à 8, où les pièces de guidage de position (843, 845) comprennent :
une partie saillante (843a) prévue dans l'orifice d'entrée de raccord (847) ;
une rainure circulaire (845b) prévue à la périphérie de la pièce de fixation de raccord (841), l'orifice d'entrée de raccord (847) étant reçu dans la rainure circulaire (845b) ; et
une rainure en saillie (845a) prévue dans la rainure circulaire (845b) et raccordée à la partie saillante.

10. Machine à traiter le linge selon la revendication 9, où la partie saillante et la rainure en saillie (845a) sont constituées d'une pluralité de parties saillantes (843a) et de rainures en saillie (845a).

11. Machine à traiter le linge selon l'une des revendications 1 à 10, où, de préférence, la direction de retrait du tiroir (3) diffère de la direction d'un arbre de rotation du tambour (5).

12. Machine à traiter le linge selon l'une des revendications 1 à 11, où :
le passage de connexion comprend un premier passage de connexion (83), dont une extrémité est reliée à la pompe de vidange (82), et une deuxième conduite de vidange (87) par laquelle l'autre extrémité du premier passage de connexion (83) communique avec l'orifice d'entrée de raccord (847) ; et
la deuxième conduite de vidange (87) est située à un emplacement plus élevé que la surface supérieure de la cuve (4), ou
la deuxième conduite de vidange (87) s'étend d'un côté de la surface supérieure de la cuve (4) à l'autre côté de celle-ci, et en tournant au moins une fois.

13. Machine à traiter le linge selon l'une des revendications 1 à 12, comprenant en outre une vanne (88) prévue dans la pompe de vidange (82) et/ou le passage de connexion et/ou le raccord (84), de manière à régler un débit d'eau de lavage passant par la pompe de vidange (82), le passage de connexion et le raccord (84), ladite vanne (88) étant de préférence une vanne électromagnétique commandée électriquement.
